Europäisches Patentamt

European Patent Office

Office européen des brevets

(19)

(11) **EP 0 951 339 B1**

(12) **FASCICULE DE BREVET EUROPEEN**

(45) Date de publication et mention
de la délivrance du brevet:
**27.03.2002 Bulletin 2002/13**

(21) Numéro de dépôt: **97950247.3**

(22) Date de dépôt: **08.12.1997**

(51) Int Cl.[7]: **B01D 53/86**, B01D 53/60

(86) Numéro de dépôt international:
**PCT/FR97/02230**

(87) Numéro de publication internationale:
**WO 98/25692 (18.06.1998 Gazette 1998/24)**

(54) **COMPOSITION DE TRAITEMENT DE FUMEES ET UTILISATIONS**

ZUSAMMENSETZUNG ZUR BEHANDLUNG VON ABGASEN UND IHRE VERWENDUNGEN

COMPOSITION FOR TREATING FUMES AND USES

(84) Etats contractants désignés:
**AT BE CH DE DK ES FI FR GB GR IE IT LI LU NL
PT SE**

(30) Priorité: **09.12.1996 FR 9615104**

(43) Date de publication de la demande:
**27.10.1999 Bulletin 1999/43**

(73) Titulaire: **Novacarb
75008 Paris (FR)**

(72) Inventeurs:
• **FOURCOT, Fabrice
F-78140 Vélizy (FR)**
• **ZING, Christophe
F-92150 Suresnes (FR)**
• **GUBELMANN, Michel
Princeton, NJ 08540 (US)**

(74) Mandataire: **Wattremez, Catherine
Rhodia Services,
Direction de la Propriété Industrielle,
40, rue de la Haie-Coq
93306 Aubervilliers Cedex (FR)**

(56) Documents cités:
**US-A- 3 932 583        US-A- 5 114 692
US-A- 5 451 558**

**Description**

La présente invention a pour objet une nouvelle composition ainsi que ses utilisations notamment dans le traitement de fumées, en particulier de fumées industrielles.

Le traitement de fumées comprenant toutes sortes de polluants, comme les acides minéraux, tels que les acides de formule HX dans laquelle X représente un halogène, les composés du type des SOx, des NOx, les dérivés organiques, comme les dioxines, les furannes, par exemple, ainsi que des métaux considérés comme toxiques, connaît un essor particulier du fait de la pression croissante de la réglementation pour l'environnement exercée sur les sociétés émettant de tels rejets gazeux.

Parmi les procédés générateurs de tels gaz, on peut, entre autres, citer les incinérateurs d'ordures ménagères, les incinérateurs de déchets hospitaliers et de déchets industriels spéciaux, les centrales thermiques, certaines productions de l'industrie chimique et les fours de type verrier.

En ce qui concerne l'élimination des polluants organiques, tels que les composés organiques halogénés, on peut citer le brevet US 5 114 692, dans lequel on met en oeuvre une réaction d'oxydation en présence d'un catalyseur. Ce catalyseur comprend un carbonate ou un bicarbonate de métal alcalin et un métal ou un oxyde métallique. Le carbonate ou bicarbonate peut être utilisé en tant que support ou dispersant du composé métallique. Le (bi)carbonate dans le catalyseur permet de piéger l'acide chlorhydrique qui se dégage avant qu'il n'ait le temps de réagir pour donner d'autres espèces halogénées toxiques.

Dans le brevet US 3 932 583, le problème de l'élimination de sulfure d'hydrogène est traité. Plus particulièrement, ce brevet a pour objet un procédé de séparation et d'élimination de sulfure d'hydrogène contenu dans un gaz comprenant, outre le sulfure d'hydrogène, du monoxyde de carbone. L'opération a lieu en mettant en contact le gaz avec une solution aqueuse de (bi)carbonate par exemple, comprenant des ions de métaux de transition et de l'oxygène dissous. Le (bi)carbonate permet de tamponner le pH du milieu, afin de maintenir des conditions favorables à la dissolution sélective du sulfure d'hydrogène. Le sulfure d'hydrogène est ensuite oxydé en soufre élémentaire, par l'action de l'oxygène et des métaux dissous dans la solution.

Les installations classiques de traitement des gaz mettent en oeuvre des traitements dits par voie sèche, ou par voie semi-humide. Dans le premier cas, l'agent neutralisant les fumées est introduit sous la forme d'un solide, et dans le second cas, ledit agent est employé sous la forme d'une suspension ou d'une solution aqueuse, dont la quantité d'eau est calculée de telle sorte que le produit issu du traitement est un solide, comme dans le premier cas.

L'un des plus anciens procédés de type sec utilise la chaux comme réactif, ce qui impose un rapport stoechiométrique important du fait de la faible réactivité de la chaux.

Ces procédés présentent en outre l'inconvénient de créer des résidus solides qui sont très difficilement revalorisables et qui doivent être mis en décharge spéciale, du fait de la présence des métaux considérés comme toxiques. Les quantités de solides dans ce cas, sont relativement importantes et occasionnent des surcoûts élevés pour le procédé.

Un procédé plus intéressant consiste à utiliser du bicarbonate de sodium. L'emploi de cet agent neutralisant permet de disposer d'un résidu solide qui est lui, facilement recyclable. Par ailleurs, le rapport stoechiométrique (quantité introduite en moles/quantité théoriquement nécessaire en moles) de bicarbonate de sodium par rapport aux composés à neutraliser présents dans les gaz à traiter est beaucoup plus faible que dans le cas de la chaux.

Ce dernier type de procédé constitue une avance technologique dans le domaine. Cependant, il comporte des limitations, en particulier, une fonction de traitement de fumées d'oxydes d'azote insuffisants.

L'un des plus anciens procédés de type sec utilise la chaux comme réactif, ce qui impose un rapport stoechiométrique important du fait de la faible réactivité de la chaux.

Ces procédés présentent en outre l'inconvénient de créer des résidus solides qui sont très difficilement revalorisables et qui doivent être mis en décharge spéciale, du fait de la présence des métaux considérés comme toxiques. Les quantités de solides dans ce cas, sont relativement importantes et occasionnent des surcoûts élevés pour le procédé.

On connaît par le brevet US 5 451 558, l'élimination, par oxydation catalytique, d'oxydes d'azote, de soufre, de carbone, présents dans des gaz de turbine. La réaction d'oxydation est effectuée en présence d'un catalyseur comprenant un support présentant une haute surface spécifique, un métal noble ou de transition en tant que catalyseur d'oxydation, et un absorbeur choisi parmi les hydroxydes, (bi)carbonates de métaux alcalins ou alcalino-terreux.

Un autre procédé, plus intéressant que celui mettant en oeuvre la chaux, consiste à utiliser du bicarbonate de sodium. L'emploi de cet agent neutralisant permet de disposer d'un résidu solide qui est lui, facilement recyclable. Par ailleurs, le rapport stoechiométrique (quantité introduite en moles/quantité théoriquement nécessaire en moles) de bicarbonate de sodium par rapport aux composés à neutraliser présents dans les gaz à traiter est beaucoup plus faible que dans le cas de la chaux.

Ce dernier type de procédé constitue une avance technologique dans le domaine. Cependant, il comporte des limitations, en particulier, une fonction de traitement de fumées d'oxydes d'azote insuffisants.

L'invention a pour but de pallier cet inconvénient et de permettre de traiter les fumées pour en neutraliser aussi bien les oxydes d'azote (NOx, avec x = 1 ou 2) que les oxydes de soufre (SOx avec x = 2 ou 3).

L'invention a pour objet une composition de traitement de fumées comprenant :

- un composant de base comprenant du bicarbonate, du carbonate de sodium, de l'ammoniac sous forme de sels d'ammonium, tels que bicarbonate, carbonate et/ou carbamate, et de l'eau, et éventuellement une source de $NH_3$ ; et
- des quantités catalytiques d'un ou plusieurs catalyseurs de dénitrification.

L'invention a également pour objet une utilisation de traitement de fumées, dans lequel on traite des fumées comprenant des NOx et SOx par une composition telle que décrite ci-dessus, selon les revendications 15 à 20.

Le composant de base peut être l'hydrogénocarbonate de sodium commercial. Il peut également être constitué par un mélange de bicarbonate de sodium et de carbonate de sodium, notamment obtenu soit par séchage ménagé du bicarbonate de sodium, soit par mélange mécanique de bicarbonate de sodium et de carbonate de sodium. La forme sesqui (trona : $NaHCO_3$. $Na_2CO_3.2H_2O$) convient également.

Avantageusement, le composant de base comprend un mélange de bicarbonate de sodium, du carbonate de sodium et d'ammoniac sous forme de sels d'ammonium.

Avantageusement, la teneur en bicarbonate de sodium est d'au moins 70% en poids, de préférence d'au moins 80 %, et plus particulièrement comprise entre 80 et 95 % en poids. La quantité en carbonate de sodium présent est avantageusement de moins de 30 % en poids, de préférence de moins de 20 %, et plus particulièrement comprise entre 5 et 15 % en poids. La quantité d'ammoniac exprimé sous forme d'ion ammonium présent est de préférence de moins de 1 % en poids et plus particulièrement varie entre 0,2 et 0,7 % en poids.

Cette composition peut comprendre en outre des sels de carbamate et de l'eau. La teneur en carbamate d'ammonium est de préférence inférieure à 0,1 % en poids et plus preferentiellement comprise entre 0,01 et 0,06 % en poids. L'eau est présente, de préférence. en quantité inférieure à 10 % en poids et plus particulièrement de 0,2 à 6 % en poids.

Un composant de base de ce type particulièrement avantageux est le produit obtenu par traitement thermique d'un bicarbonate ammoniacal à une température comprise entre 20 et 150°C, le traitement thermique étant de préférence effectué sous une atmosphère contrôlée pouvant comprendre de l'eau et/ou du dioxyde de carbone.

Il convient de préciser que le bicarbonate ammoniacal utilisé est le produit intermédiaire obtenu en mettant en oeuvre le procédé de préparation de carbonate de sodium par la technique de la soude à l'ammoniaque, connue sous le nom de "procédé Solvay".

Plus précisément, on appelle bicarbonate ammoniacal aux fins de la présente invention, le produit obtenu après dissolution d'ammoniac gazeux dans une solution aqueuse de chlorure de sodium de manière à produire une saumure ammoniacale. Celle-ci est ensuite traitée avec un gaz contenant du dioxyde de carbone pour donner des cristaux de bicarbonate ammoniacal.

Le bicarbonate ammoniacal désigne en fait une composition comprenant principalement du bicarbonate de sodium, du carbonate de sodium, et dans une moindre mesure, de l'ammoniac sous forme de sels ammonium tels que bicarbonate, carbonate et/ou carbamate, et de l'eau.

A titre indicatif, une composition de ce type peut comprendre : 70 à 90 % en poids de bicarbonate de sodium ($NaHCO_3$), 2 à 20 % en poids de carbonate de sodium ($Na_2CO_3$), 0,2 à 1,0 % en poids d'ammoniac exprimé sous forme d'ion ammonium, 0,3 à 2,0 % en poids de carbamate d'ammonium ($NH_4O_2CNH_2$) et 5 à 20% en poids d'eau.

Le traitement du bicarbonate ammoniacal dans la gamme de température spécifiée, et plus particulièrement à température élevée, et sous une atmosphère contrôlée en eau et/ou en dioxyde de carbone, permet de sécher et de décomposer sélectivement les sels d'ammonium présents tels que bicarbonate, carbonate et/ou carbamate, en ammoniac et en dioxyde de carbone, sans décomposition substantielle du bicarbonate de sodium présent dans le mélange en carbonate de sodium.

Le traitement thermique peut avoir lieu à une température comprise entre 20 et 150°C, avantageusement entre 20 et 130°C, sous une atmosphère contrôlée pouvant comprendre de l'eau et/ou du dioxyde de carbone, de préférence sous agitation.

Plus particulièrement, le traitement thermique est effectué en présence d'une atmosphère dont la teneur en vapeur d'eau est comprise entre 0 et 10 % molaire.

En ce qui concerne le dioxyde de carbone, le traitement thermique est effectué en présence d'une atmosphère dont la teneur en dioxyde de carbone est comprise entre 0 et 100 % molaire.

Par ailleurs, le traitement thermique est effectué sous une atmosphère pouvant comprendre de l'air, ou tout autre gaz inerte tel que les gaz rares, l'azote. La teneur en ce type de gaz, s'il est utilisé, assure le complément pour atteindre la pression totale souhaitée.

La température de traitement du bicarbonate ammoniacal peut être adaptée en fonction de la quantité de vapeur d'eau et de dioxyde de carbone présents.

Ainsi, dans le cas où l'atmosphère est un mélange azote/oxygène ou air, la gamme de température pour le traitement thermique sera de préférence inférieure à 80°C.

Par ailleurs, si le traitement est mis en oeuvre sous une atmosphère comprenant un mélange de dioxyde de carbone et de vapeur d'eau, et éventuellement de l'air ou un gaz inerte, il est alors envisageable d'effectuer ce dernier à une température proche de 120°C-130°C, bien que des températures plus faibles restent possibles.

Pour ce qui précède, les valeurs des températures sont exprimées à la pression atmosphérique. L'homme du métier est capable d'adapter les valeurs des températures en fonction de la pression sous laquelle est réalisé le traitement, la préparation du composant de base selon l'invention pouvant être effectuée sous toute pression.

Le traitement thermique est de préférence réalisé sous un flux gazeux. Une raison à ceci est qu'il est hautement souhaitable de ne pas maintenir une pression partielle en ammoniac au-dessus du bicarbonate ammoniacal, afin de favoriser la décomposition des sels d'ammonium tels que bicarbonate, carbonate et/ou carbamate.

Habituellement, la durée de l'opération et d'au plus quelques heures.

On obtient, à l'issue de ce traitement, un mélange de bicarbonate et de carbonate comprenant de l'ammoniac, tel que décrit ci-dessus.

Ce mélange est utilisé pour le composant de base de la présente invention. L'intérêt d'un composant de base de ce type est qu'il contient de l'ammoniac et permet donc l'introduction de la source d'ammoniac en même temps que le bicarbonate lors du procédé de traitement de fumées.

Le composant catalytique de dénitrification consiste en tout type de catalyseur utilisé dans les systèmes catalytiques actuels de dénitrification.

Ainsi, le composant catalytique selon l'invention sera avantageusement à base de vanadium, titane, zirconium et/ou tungstène.

Avantageusement, on utilise des composants catalytiques à base de vanadium ou tungstène, ou vanadium dopé au tungstène, dispersé sur titane.

L'efficacité de la composition selon l'invention peut en outre être adaptée par l'introduction dans la composition catalytique d'autres métaux de transition, voire de terres rares, comme le cérium.

Pour le traitement de fumées provenant de véhicules automobiles, des composants catalytiques de choix sont Cu/MxOy (avec MxOy = $Al_2O_3$ ; $TiO_2$ ; $ZrO_2$ ; zéolithes), CoP + Na zéolithe, CoZSM - 5, HZSM - 5, In/H-ZSM -5.

Pour le traitement de fumées industrielles, les composants catalytiques de choix répondent à la formule $V_2O_5$/$TiO_2$ ou $V_2O_5$/$ZrO_2$.

Les composants catalytiques peuvent être introduits à l'état solide, notamment lorsque le composant de base est sous forme solide.

Un type de composants catalytiques solides que l'on peut utiliser dans le cadre de la présente invention est constitué de réactifs solides de formules {$V_2O_5$. $WO_3$}/$TiO_2$, $WO_3$/$TiO_2$ ou {CuO. $V_2O_5$. $K_2SO_4$}/$Al_2O_3$.

Le vanadium peut également être remplacé par du manganèse.

Des composés catalytiques préférés à base de manganèse sont du type $MnO_2$ ou $MnO_3$, éventuellement additionnés de terres rares.

Les composants catalytiques peuvent également être introduits sous forme de leurs précurseurs lorsque le composant de base est sous forme de suspension ou solution aqueuse.

Les éléments catalytiques sont présents en une proportion comprise entre 0,0001 et 0,2, de préférence 0,001 et 0,1, ces chiffres exprimant le rapport molaire des espèces métalliques du composant catalytique au sodium du composant de base.

La composition selon l'invention est obtenue en mélangeant, dans un réacteur approprié, le composant à base de bicarbonate avec une composition catalytique, décrite ci-dessus.

Lorsque le composant à base de bicarbonate et le composant catalytique sont sous forme solide, le mélange est réalisé à l'aide d'une technique de mélange solide/solide connue, dans un réacteur tel qu'un malaxeur ou un granulateur.

Lorsque le composant à base de bicarbonate est sous forme liquide, en solution ou suspension aqueuse, on introduira le composant catalytique sous la forme d'un précurseur des différents métaux et on réalisera le mélange, par exemple, dans un granulateur.

La teneur en eau de la composition finale peut être comprise entre 2 et 15% en poids, par rapport au composant à base de bicarbonate, de préférence entre 5 et 10 %.

Il est préférable d'utiliser un réactif, qui se présente sous forme solide, de granulométrie fine et contrôlée de façon à améliorer la cinétique du traitement de neutralisation.

Par exemple, on préfère utiliser un réactif dont la taille moyenne des particules est inférieure à 50 µm.

Selon un mode de réalisation plus particulier, on utilise un réactif dont la granulométrie moyenne est comprise entre 5 et 30 µm.

Si l'on met en oeuvre un réactif de granulométrie supérieure ou de l'ordre de 50 µm, il peut être avantageux d'effectuer préalablement au traitement des fumées, une étape de broyage dudit réactif pour atteindre une granulométrie de l'ordre de 5 à 30 μm. Une telle étape peut être mise en oeuvre par tout moyen classique connu de l'homme du métier.

Si l'on met en oeuvre la variante avec un apport extemporané d'eau, cette dernière peut être apportée avant le traitement des fumées ou bien encore, lors du traitement de ces fumées.

Ainsi, on peut mettre en contact l'eau sous forme pulvérisée et la composition selon l'invention, dans un tambour humidificateur, si l'apport d'eau a lieu avant le traitement des fumées proprement dit.

Dans le cas où l'on apporte l'eau lors de la mise en contact du réactif avec les fumées, on injecte celle-ci dans les quantités requises, directement dans la veine gazeuse.

L'invention a également pour objet un procédé de traitement de fumées, comprenant la mise en contact d'une composition telle que définie ci-dessus avec les fumées à traiter à une température comprise entre 200 et.700°C, avantageusement 300 et 500°C, une température préférée se situant aux environ de 350°C.

La composition selon l'invention est particulièrement utile pour le traitement de fumées contenant principalement des SOx, notamment $SO_2$ et $SO_3$, et NOx, notamment NO et $NO_2$.

Celles-ci peuvent en outre contenir des acides de formule HX, X étant un atome d'halogène, notamment le chlore ainsi que des métaux considérés comme toxiques.

Par métaux considérés comme toxiques, on désigne plus particulièrement les métaux lourds et/ou les métaux polyvalents. A titre d'exemple, mais sans intention de se limiter, on peut citer le mercure, le cadmium, le plomb, l'arsenic, le sélénium, l'argent, l'antimoine, le zinc, le silicium, le calcium, le titane, le chrome, le manganèse, le fer, le nickel, le cuivre, le molybdène, l'étain, le bismuth, le vanadium et le cobalt.

Les fonctions de la composition et du procédé selon l'invention dans le traitement de fumées, notamment issues de fours verriers sont les suivants :

- créer continuellement une dispersion micronique de $Na_2CO_3$ selon l'équation :

$$2 \text{ NaHCO}_3 \rightarrow \text{Na}_2\text{CO}_3 + \text{H}_2\text{O} + \text{CO}_2 \tag{1}$$

- neutraliser les oxydes de soufre (majoritairement $SO_2$) selon l'équation (2):

$$\text{SO}_2 + (1+x)\text{Na}_2\text{-xHxCO}_3 + 1/2 \text{ O}_2 \rightarrow \text{Na}_2\text{SO}_4 + x\text{H}_2\text{O} + \text{CO}_2 \tag{2}$$

- favoriser la neutralisation partielle des oxydes d'azote par $SO_2$ par effet de "contact" à la surface de $Na_2CO_3$, selon les équations (3) et (4) :

$$2 \text{ NO} + 2\text{SO}_2 \rightarrow \text{N}_2 + 2 \text{ SO}_3 \tag{3}$$

$$2 \text{ NO}_2 + 4\text{SO}_2 \rightarrow \text{N}_2 + 4 \text{ SO}_3 \tag{4}$$

- libérer une pression partielle d'eau localisée et très favorable à la captation des polluants, tels SOx et NOx.

- constituer un réservoir de $NH_3$ libérable pour la réduction non-catalytique ou catalytique des NOx selon les équations (5) et (6) :

$$4\text{NO} + 4\text{NH}_3 + \text{O}_2 \rightarrow 4\text{N}_2 + 6 \text{ H}_2\text{O} \tag{5}$$

$$2\text{NO}_2 + 4\text{NH}_3 + \text{O}_2 \rightarrow 3\text{N}_2 + 6 \text{ H}_2\text{O} \tag{6}$$

- apporter des principes catalytiques libérables par fluidisation dans la veine gazeuse, pour la dénitrification réductrice catalytique.

Les fumées peuvent être traitées, de manière avantageuse, par la voie semi-humide ou par la voie sèche.

Par voie semi-humide, on définit un procédé dans lequel la composition issue du procédé selon l'invention (appelée aussi par la suite réactif) est introduite en présence d'eau dans une quantité telle que les produits obtenus après le traitement se trouvent sous une forme solide. Dans ce cas, le réactif est mis en oeuvre sous la forme d'une suspension ou d'une solution.

La teneur en eau nécessaire pour obtenir une solution ou une suspension du réactif peut être déterminée par l'homme du métier en fonction des contraintes technologiques du procédé. Plus particulièrement, cette teneur dépend de la température de traitement des fumées, de de la capacité d'évaporation des appareillages et du fait que l'on souhaite obtenir, après ledit traitement, un produit solide.

Dans ce cas, on peut distinguer deux types de mise en oeuvre, la première variante est effectuée sans apport d'eau supplémentaire, et la seconde variante est effectuée en apportant de l'eau mais avec une quantité telle que le réactif conserve son aspect de poudre.

Dans ce dernier cas, la teneur en eau est comprise entre 2 et 15 % en poids par rapport au poids du réactif. De préférence, la quantité d'eau est comprise entre 5 et 10 %.

Les fumées de ce type sont plus particulièrement dues à l'incinération d'ordures ménagères, de déchets hospitaliers ou encore de déchets industriels spéciaux.

Les fumées comprenant majoritairement des SOx sont plus particulièrement rencontrées avec l'exploitation de centrales thermiques, de fours verriers par exemple.

Il est par ailleurs à noter que de telles fumées peuvent aussi comprendre des poussières et/ou des cendres volantes, ainsi que d'autres polluants comme les composés du type des NOx, ou encore des composés organiques, comme les dioxines ou les furannes.

Les fumées comprenant des quantités importantes des NOx sont en particulier celles des fours verriers. Ces fumées peuvent être traitées, de manière avantageuse, par voie sèche.

Avantageusement, on effectue le traitement des fumées de telle sorte que le rapport stoechiométrique entre le réactif et les composés du type des SOx que l'on cherche à éliminer soit compris entre 1,02 et 2.

De préférence, ledit rapport stoechiométrique est compris entre 1,02 et 1,5. Selon un mode de réalisation avantageux, le rapport stoechiométrique est compris entre 1,05 et 1,3.

Lorsque le composant de base ne contient pas de source de $NH_3$, celui-ci est injecté dans la veine gazeuse en même temps que la composition de l'invention.

La méthode d'injection par voie solide ou semi-humide dans la veine gazeuse est réalisée selon une technique bien connue de l'homme du métier.

Si les fumées à traiter comprennent des polluants organiques, il peut être avantageux d'injecter également dans la veine gazeuse un adsorbant, avec le réactif et éventuellement l'eau. L'adsorbant comprenant les polluants organiques peut être ensuite récupéré avec les solides issus du traitement des fumées.

Il est à noter que ce traitement permet aussi d'augmenter la quantité de mercure récupéré s'il est présent dans les fumées.

L'adsorbant est en général du charbon actif et/ou du coke de lignite.

En outre, si les fumées comprennent des poussières ou des cendres volantes, celles-ci peuvent être récupérées avec les solides produits lors de la neutralisation, ou bien préalablement au traitement selon l'invention, par des méthodes classiques.

La mise en contact desdites fumées avec le réactif, éventuellement l'eau et l'adsorbant, est effectuée de manière connue.

Ainsi, elle peut avoir lieu à co-courant ou à contre-courant.

Le traitement peut de même être effectué dans tout type de réacteur favorisant la dispersion du solide, de la suspension ou de la solution dans les fumées, comme les réacteurs comprenant des systèmes de type Venturi, ou les réacteurs à lit fluidisé.

Les solides produits par le procédé de traitement des fumées sont ensuite séparés en mettant en oeuvre des techniques classiques telles que les électrofiltres ou les filtres à manche.

Selon un mode de réalisation avantageux de la présente invention, au moins une partie des solides issus du traitement des fumées est recyclée vers une nouvelle étape de traitement des fumées.

Dans le cas où l'on effectue un traitement par voie sèche en présence d'eau apportée extemporanément, on peut recycler lesdits solides dans la zone de préparation du mélange réactif/eau.

Si l'eau est mise en contact dans la zone de neutralisation, les solides sont introduits dans cette zone, séparément ou avec l'introduction de réactif frais.

Ce mode de réalisation avec recyclage est intéressant pour augmenter encore l'efficacité du procédé, notamment en cas de temps de séjour court dans la zone de neutralisation. Ce mode permet de même d'abaisser les seuils de purification des fumées.

Les solides issus du procédé selon l'invention présentent l'avantage d'être valorisables.

Ainsi, les solides issus du traitement des fumées sont purifiés en mettant en oeuvre une première étape de dissolution dans l'eau, suivie d'une étape de séparation des métaux considérés comme toxiques qu'ils contiennent.

Dans le cas plus particulier où les fumées comprennent majoritairement des acides de formule HX, et plus particulièrement l'acide chlorhydrique, les solides résultant du procédé selon l'invention contiennent des halogénures de sodium tel que le chlorure de sodium, outre les métaux considérés comme toxiques.

Dans ce cas, ces solides sont mis en contact avec de l'eau, ce qui a pour effet de solubiliser les halogénures de sodium présents ainsi que certains des métaux considérés toxiques présents. On procède ensuite à une première étape de séparation des matières restées insolubles, en général par filtration.

Les métaux considérés comme toxiques qui ont été solubilisés sont à leur tour séparés de la solution aqueuse de chlorure de sodium à purifier. Plus particulièrement, on met en oeuvre une ou plusieurs étapes de précipitation.

Le contrôle de la valeur du pH est effectué en ajoutant soit un acide, soit une base. Pour des raisons évidentes visant à ne pas polluer le mélange, l'acide et la base sont choisis en fonction des ions qu'ils apportent. C'est pourquoi, on préfère utiliser de l'acide chlorhydrique comme acide, et de l'hydroxyde de sodium, du carbonate ou du bicarbonate de sodium en tant que bases. Les précipités des métaux considérés comme toxiques sont ensuite éliminés par filtration notamment.

On peut également ajouter un agent de précipitation des composés à base de sulfate, obtenu par la neutralisation des SOx lors du traitement des fumées, tel que le chlorure de calcium.

Ensuite, on effectue une séparation du gypse et du fluorure de calcium, éventuellement présent qui ont précipité. Cette étape de séparation peut avoir lieu en même temps que celle du précipité contenant les métaux considérés comme toxiques.

Dans le cas où un degré de pureté de la solution aqueuse de chlorure de sodium est souhaité, on peut procéder à une ou plusieurs étapes de purification supplémentaires.

Une première variante consiste à mettre en contact ladite solution aqueuse avec une ou plusieurs résines échangeuses d'ions. Les résines peuvent être sous forme d'hydrogène ou de sodium, avec toutefois une préférence pour le second type de résines qui permet une extraction optimale des ions des métaux considérés comme toxiques présents dans la solution.

Une autre variante possible a trait à l'emploi d'agents tels que les sulfures minéraux ou les composés soufrés organiques. Parmi les sulfures minéraux, on peut citer les sulfures de sodium, de fer ou encore de baryum. A titre d'exemples de composés soufrés organiques, on peut citer plus particulièrement le sel trisodique de la trimercapto-S-triazine, en solution à 15 % dans l'eau (TMT 15®).

Une troisième variante consiste en la combinaison de ces possibilités.

Les solutions aqueuses de chlorure de sodium, dont les degrés de pureté peuvent être adaptés, sont valorisables dans divers procédés industriels. Ainsi, ces solutions peuvent entrer dans la synthèse de carbonate ou de bicarbonate de sodium (procédé Solvay), ou encore dans la préparation de solutions d'hydroxyde de sodium par électrolyse.

Dans le cas où les fumées sont majoritairement à base de composés du type des SOx, les résidus obtenus, à base de sulfate de sodium principalement et comprenant de même des métaux considérés comme toxiques, peuvent aussi être de façon avantageuse valorisés après purification.

Une première étape consiste, là encore, à mettre en contact les résidus solides avec de l'eau ou une solution aqueuse recyclée comprenant du sulfate de sodium.

Le but de cette seconde étape est d'une part de dissoudre de manière sélective les sulfates, le cas échéant les sels halogénés, qui sont le plus souvent des chlorures. D'autre part, l'objectif de cette étape est de laisser en suspension la majeure partie des métaux considérés comme toxiques.

Une telle opération de dissolution sélective est effectuée en contrôlant le pH du milieu pour se trouver dans une gamme de solubilité minimale des métaux, qui sont notamment sous forme d'hydroxyde et/ou de carbonates.

Il est clair que la gamme dépend de la nature des métaux présents et un compromis entre chacun d'eux peut être nécessaire.

En règle générale, la dissolution est effectuée dans une gamme de pH comprise entre 3 et 10, ces deux bornes étant comprises.

Selon une première variante, et si l'aluminium n'est pas présent en quantité élevée par rapport aux autres métaux, une gamme de pH se situant entre 7 et 10, les deux bornes étant comprises, représente un bon compromis. Plus particulièrement, on peut effectuer la dissolution dans une gamme de pH comprise entre 7 et 9, ces deux bornes étant comprises.

Selon une deuxième variante et dans le cas où la quantité d'aluminium est élevée, il peut être souhaitable d'opérer la dissolution à un pH compris entre 3 et 7, ces deux bornes étant comprises.

On ne sortirait pas du cadre de la présente invention en mettant en oeuvre les deux variantes précitées successivement. Ainsi, l'étape de dissolution peut correspondre à deux étapes successives avec une étape de séparation intermédiaire, l'une effectuée a un pH compris entre 7 et 10, la seconde à un pH compris entre 3 et 7, l'ordre dépendant de la valeur du pH de la solution initiale.

Le contrôle de la valeur du pH est effectué en ajoutant soit un acide, soit une base, choisis de maniere à ne pas polluer le mélange. Ainsi, on préfère utiliser de l'acide sulfurique ou du carbonate ou du bicarbonate de sodium.

L'étape de dissolution sélective des sulfates est effectuée, selon un mode de réalisation particulier de l'invention, à une température comprise entre 15 et 80°C, plus particulièrement entre 20 et 60°C. Un mode de réalisation avantageux consiste à réaliser cette dissolution à une température voisine de 30 à 40°C.

Après la dissolution et dans le cas où les fumées traitées contiennent des sulfites ou des bisulfites, on peut effectuer une oxydation de ces espèces en sulfates. Cette opération est en général réalisée en ajoutant au moins un composé oxydant dans le mélange, éventuellement en combinaison avec un chauffage de ce dernier. A titre d'exemple de composés oxydants, on peut citer l'air, le peroxyde d'hydrogène, les persulfates ou encore le sel de l'acide de Caro.

Une fois le sulfate de sodium dissous, on sépare la solution des solides qu'elle contient par filtration, ou toute autre méthode classique.

Les résidus solides peuvent alors être mis en décharge. On constate qu'à ce stade, la quantité de résidus à mettre en décharge a considérablement diminué par rapport aux procédés classiques de neutralisation à la chaux, et ce, en mettant en oeuvre un procédé simple.

Le filtrat correspondant à une solution aqueuse de sulfate de sodium purifiée, est par la suite traité de façon à cristalliser ledit sulfate.

Cette opération peut être mise en oeuvre par tout moyen connu de l'homme du métier.

Selon une première variante, on refroidit le filtrat jusqu'à obtenir une différence de température de 15 à 20°C entre les températures de dissolution et de cristallisation.

Dans ce cas, les cristaux obtenus sont sous forme décahydratée.

Selon une seconde variante, on cristallise le sulfate de sodium par évaporation d'au moins une partie de l'eau de la solution.

Les cristaux résultants se trouvent sous forme anhydre.

Le liquide résultant de la cristallisation peut être avantageusement recyclé à l'étape de dissolution des solides issus de l'étape de traitement des fumées.

Avant le recyclage, il peut être intéressant de prélever une partie de ce liquide afin d'éviter l'enrichissement des liquides en métaux considérés comme toxiques, ou éventuellement de traiter ce liquide.

Bien qu'une telle étape ne soit qu'optionnelle, on peut là encore procéder, avant cristallisation du sulfate de sodium, à une purification supplémentaire de la solution, de manière à éliminer les métaux considérés comme toxiques restant éventuellement en solution.

Une première méthode consiste à ajouter à la solution au moins un agent précipitant adéquat, choisi notamment parmi les hydroxydes de métaux alcalins, le carbonate de sodium, le carbonate de sodium, ou encore les silicates, ces agents précipitants pouvant être utilisés seuls ou en mélange.

A titre d'agents de ce type, on peut aussi mentionner les produits commercialisés sous la dénomination Profix®, Max Flow®, Low Ash®.

Une seconde méthode consiste à mettre en contact la solution avec au moins un sulfure minéral, au moins un composé soufré organique, ou leur mélange. Ce qui a été indiqué pour la variante où les fumées à traiter contiennent plus particulièrement des acides de formule HX reste valable et ne sera donc pas repris ici.

Une troisième méthode convenable consiste à mettre en contact la solution avec une résine échangeuse d'ions. On pourra se référer, comme précédemment, à ce qui a été décrit pour la purification supplémentaire des solutions issues du traitement de fumées comprenant principalement des acides de formule HX.

La pureté de ces cristaux est telle qu'ils peuvent être valorisables directement ou après séchage ou granulation.

Le sulfate de sodium peut notamment être revalorisé dans les fours verriers par exemple.

La dénitrification catalytique ou non catalytique produit de l'azote moléculaire qui est rejeté dans l'atmosphère.

On donnera ci-après des exemples de réalisation selon l'invention.

**Exemple 1 :**

**Préparation du composant à base de bicarbonate, carbonate et ammoniac.**

On effectue le traitement sous air à 30°C, de 50 g de bicarbonate ammoniacal comprenant 74,1 % en poids de bicarbonate de sodium, 9 % en poids de carbonate de sodium, 1 % en poids de carbamate d'ammonium, 1 à 2 % en poids de bicarbonate et de carbonate d'ammonium, le reste étant de l'eau, avec une quantité négligeable de chlorure de sodium.

Le tableau ci-dessous résume les résultats obtenus.

| Durée (heures) | Perte de masse (% en poids) | NH₃ total * (% en poids) |
|---|---|---|
| 1 | 5,4 | 0,7 |
| 2 | 10,1 | 0,6 |

\* $NH_3$ total (% en poids) exprimé sous forme d'ion ammonium

La valeur relative à l'ammoniac total présent, exprimé sous forme de teneur en ion ammonium, correspond à la totalité des composés ammoniacaux susceptibles de libérer de l'ammoniac.

Après deux heures, on constate que la valeur de l'ammoniac total ne varie plus de manière substantielle, même après un traitement d'une dizaine d'heures.

Le produit final, c'est-à-dire après deux heures de traitement, comprend 83,7 % en poids de bicarbonate de sodium, 10 % en poids de carbonate de sodium, le complément à 100 % étant constitué par de l'eau, avec une quantité négligeable de chlorure de sodium.

### Exemples 2 à 5 :

### Préparation des réactifs

Les réactifs suivants ont été préparés par mélange solide/solide d'un composant de base tel que décrit à l'exemple 1 avec des composants catalytiques, sous forme d'oxydes, dans les proportions indiquées au tableau ci-dessous, dans un granulateur, comme décrit précédemment.

| Exemples | Ratio* Σ M**/Na | M | V/Zr* | Cu/Zr* | W/Zr* |
|---|---|---|---|---|---|
| R2 | 0,0138 | M= V+Zr+Cu | 2,700 | 0,510 | 0,052 |
| R3 | 0.0121 | M=V+Zr+W | 2,700 | - | 0,052 |
| R4 | 0,0274 | M=Mn | - | - | - |
| R5 | 0,0277 | M=Mn | - | - | - |

\* : ratio atomique

\*\* : somme des proportions atomiques des métaux concernés

### Exemples 6 à 11 :

### Mise en oeuvre

L'efficacité des formulations de traitement des gaz a été testée de manière comparative en utilisant un montage de laboratoire dans des conditions représentatives d'un traitement de fumées industrielles.

Un réacteur de 35 mm de diamètre environ comportant un lit de produit à tester est traversé pendant une durée de 15 à 30 minutes par le gaz à traiter.

La hauteur de lit est maintenue quasi-constante pour les différents produits.

La composition du gaz à l'alimentation est la suivante (les proportions sont indiquées par rapport a la composition gazeuse sèche) :

| | |
|---|---|
| $CO_2$ | 9 % mol |
| $SO_2$ (1060 vpm) | 0,1060 % mol |
| NOx (550 vpm) | 0,0550 % mol |
| dont NO (525 vpm) | 0,0525 % mol |
| $O_2$ | 7 % mol |
| $H_2O$ | 8,6 % mol |
| Complément par de l'azote. | |

La température est de 280 à 290°C.

Les produits testés sont :

- chaux pour traitement de gaz,
- bicarbonate de sodium ($NaHCO_3$) à 100 % de pureté,
- réactif 2,
- réactif 3,
- réactif 4,
- réactif 5,

Le produit est introduit à un rapport stoechiométrique (RS) défini ci-dessous :

- pour les réactifs à base de chaux :

$$RS = \frac{\text{moles Ca(OH)}_2}{\text{moles SO}_2 \text{ à l'entrée}}$$

- pour les réactifs à base de bicarbonate de sodium :

$$RS = \frac{\text{moles équivalent NaHCO}_3}{2 \text{ x moles SO}_2 \text{ à l'entrée}}$$

Pour comparer les réactifs, on s'est placé dans des conditions similaires de rendement DéSOx en ajustant le RS. La hauteur de lit devant être constante, on a joué sur le débit de gaz en tenant compte de la densité des différents produits.

Les résultats sont résumés dans le tableau ci-dessous.

| Exemples | Réactif | RS | T(°C) | Rdt DéSOx (%) (1) | Rdt DéNO (%) (2) | Rdt DéNOx (%) (3) |
|---|---|---|---|---|---|---|
| 6 | chaux | 3,1 | 280-290 | 89 | < 5 | < 2 |
| 7 | $NaHCO_3$ | 1,08 | " | 90 | 41 | 4 |
| 8 | R2 | 1,1 | " | 90,5 | 48,7 | 26,3 |
| 9 | R3 | 1,09 | " | 89,2 | 52 | 22,9 |
| 10 | R4 | 1,14 | " | 92,7 | 55 | 24,1 |
| 11 | R5 | 1,17 | " | 92,4 | 52,4 | 28,9 |

(1) Rdt DéSOx : $\dfrac{(\text{mole SO}_2)_E - (\text{mole SO}_2)_S}{(\text{mole SO}_2)_E} \times 100$

(2) Rdt DéNO : $\dfrac{(\text{mole NO})_E - (\text{mole NO})_S}{(\text{mole NO})_E} \times 100$

(3) Rdt DéNOx: $\dfrac{[(\text{mole (NO + NO}_2)] _E - [\text{mole (NO + NO}_2)]_S}{[\text{mole (NO + NO}_2)]_E} \times 100$

E : entrée

S : sortie

### Exemples 12 et 13 :

### Mise en oeuvre à haute température

Les réactifs R2 et R5 décrits précédemment ont été mis en oeuvre à une température de 400°C.

Les résultats sont rapportés dans le tableau ci-dessous.

| Exemples | Réactif | RS | T(°C) | RdtDéSOX (%) (1) | Rdt DéNO (%) (2) | Rdt DéNOx (%) (3) |
|---|---|---|---|---|---|---|
| 12 | R2 | 1,1 | 400 | 95 | 45,1 | 61,4 |
| 13 | R5 | 1,1 | " | 94,9 | 48,2 | 68,3 |

**Revendications**

1.  Composition de traitement de fumées comprenant:

    -   un composant de base comprenant du bicarbonate de sodium, du carbonate de sodium, de l'ammoniac sous forme de sels d'ammonium tels que bicarbonate, carbonate et/ou carbamate, et de l'eau, et éventuellement une source d'ammoniac ; et
    -   des quantités catalytiques d'un ou plusieurs catalyseurs de dénitrification.

2.  Composition selon la revendication 1, **caractérisée en ce qu'**elle comprend au moins 70 % en poids de bicarbonate de sodium, de préférence au moins 80 % en poids, et plus préférentiellement entre 80 et 95 % en poids.

3.  Composition selon l'une quelconque des revendications précédentes, **caractérisée en ce qu'**elle comprend moins de 30 % en poids de carbonate de sodium, de préférence moins de 20% en poids, et plus préférentiellement entre 5 et 15 % en poids.

4.  Composition selon l'une quelconque des revendications précédentes, **caractérisée en ce que** le composant de base comprend de 0,2 à 0,7 % en poids d'ammoniac, exprimé en ion ammonium.

5.  Composition selon l'une quelconque des revendications précédentes, **caractérisée en ce qu'**elle comprend moins de 0,1 % en poids de carbamate d'ammonium et de préférence entre 0,01 et 0,06 % en poids.

6.  Composition selon l'une quelconque des revendications précédentes, **caractérisée en ce qu'**elle comprend moins de 10 % en poids d'eau et de préférence entre 0,2 et 6 % en poids.

7.  Composition selon la revendication 1, **caractérisée en ce qu'**elle se présente sous forme d'une poudre aisément manipulable.

8.  Composition selon l'une quelconque des revendications précédentes, **caractérisée en ce que** le composant de base est obtenu par traitement thermique à une température comprise entre 20 et 150°C de bicarbonate ammoniacal.

9.  Composition selon l'une quelconque des revendications précédentes, **caractérisée en ce que** le composant catalytique de dénitrification est à base de vanadium, titane, manganèse, cuivre, zirconium et/ou tungstène.

10. Composition selon l'une quelconque des revendications précédentes, **caractérisée en ce que** le catalyseur de dénitrification est à base de vanadium ou de manganèse, dispersé sur titane.

11. Composition selon la revendication 9 ou la revendication 10, **caractérisée en ce que** le catalyseur comprend en outre un autre métal de transition, ou une terre rare.

12. Procédé de préparation d'une composition selon l'une quelconque des revendications précédentes, **caractérisé en ce qu'**il consiste à mélanger le composant de base avec le(s) catalyseur(s) ou un précurseur du(des) catalyseur (s), en milieu solide ou liquide.

13. Procédé selon la revendication 12, **caractérisé en ce que** la préparation d'une composition solide est réalisée par une technique de mélange solide/solide.

14. Procédé selon la revendication 12, **caractérisé en ce que** l'on mélange une solution ou dispersion du composant de base avec une solution d'un(de) précurseur(s) du catalyseur.

15. Utilisation de la composition selon l'une quelconque des revendications 1 à 11 dans le traitement de fumées.

16. Utilisation de la composition selon l'une quelconque des revendications 1 à 11 pour le traitement de fumées contenant des composés du type SOx et/ou NOx.

17. Utilisation de la composition selon l'une quelconque des revendications 1 à 11 dans le traitement de fumées, **caractérisée en ce que** l'on traite lesdites fumées par voie sèche.

**18.** Utilisation selon l'une quelconque des revendications 15 à 17, **caractérisée en ce que** l'on injecte la composition dans la veine gazeuse, éventuellement en présence de NH$_3$.

**19.** Utilisation selon l'une quelconque des revendications 15 à 18, **caractérisée en ce que** le traitement est effectué à une température comprise entre 200 et 700°C, avantageusement 300 et 500°C.

**20.** Utilisation selon l'une quelconque des revendications 15 à 19 pour le traitement de fumées de fours verriers.

**Patentansprüche**

**1.** Zusammensetzung zur Behandlung von Rauchgasen, umfassend:

- eine Basenzusammensetzung, die Natriumbicarbonat, Natriumcarbonat, Ammoniak in Form von Ammoniumsalzen, wie Ammoniumbicarbonat, -carbonat und/oder -carbamat, und Wasser und gegebenenfalls eine Ammoniakquelle enthält; und
- katalytische Mengen von einem oder mehreren Denitrifizierungskatalysatoren.

**2.** Zusammensetzung nach Anspruch 1, **dadurch gekennzeichnet, dass** sie mindestens 70 Gew.-% Natriumbicarbonat, vorzugsweise mindestens 80 Gew.-% und noch mehr bevorzugt zwischen 80 und 95 Gew.-% enthält.

**3.** Zusammensetzung nach einem der vorangegangenen Ansprüche, **dadurch gekennzeichnet, dass** sie weniger als 30 Gew.-% Natriumcarbonat, vorzugsweise weniger als 20 Gew.-% und noch mehr bevorzugt zwischen 5 und 15 Gew.-% enthält.

**4.** Zusammensetzung nach einem der vorangegangenen Ansprüche, **dadurch gekennzeichnet, dass** die Basenzusammensetzung 0,2 bis 0,7 Gew.-% Ammoniak, ausgedrückt in Ammoniumionen, enthält.

**5.** Zusammensetzung nach einem der vorangegangenen Ansprüche, **dadurch gekennzeichnet, dass** sie weniger als 0,1 Gew.-% Ammoniumcarbamat und vorzugsweise zwischen 0,01 und 0,06 Gew.-% enthält.

**6.** Zusammensetzung nach einem der vorangegangenen Ansprüche, **dadurch gekennzeichnet, dass** sie weniger als 10 Gew.-% Wasser und vorzugsweise zwischen 0,2 und 6 Gew.-% enthält.

**7.** Zusammensetzung nach Anspruch 1, **dadurch gekennzeichnet, dass** sie in Form eines leicht manipulierbaren Pulvers vorliegt.

**8.** Zusammensetzung nach einem der vorangegangenen Ansprüche, **dadurch gekennzeichnet, dass** die Basenzusammensetzung durch Wärmebehandlung von ammoniakalischem Bicarbonat bei einer Temperatur zwischen 20 und 150°C erhalten wird.

**9.** Zusammensetzung nach einem der vorangegangenen Ansprüche, **dadurch gekennzeichnet, dass** die katalytisch wirkende Denitrifizierungszusammensetzung auf Vanadium, Titan, Mangan, Kupfer, Zirconium und/oder Wolfram basiert.

**10.** Zusammensetzung nach einem der vorangegangenen Ansprüche, **dadurch gekennzeichnet, dass** der Denitrifizierungskatalysator auf Vanadium oder Mangan, dispergiert auf Titan, basiert.

**11.** Zusammensetzung nach Anspruch 9 oder Anspruch 10, **dadurch gekennzeichnet, dass** der Katalysator außerdem ein anderes Übergangsmetall oder eine seltene Erde enthält.

**12.** Verfahren zur Herstellung einer Zusammensetzung nach einem der vorangegangenen Ansprüche, **dadurch gekennzeichnet, dass** es darin besteht, die Basenzusammensetzung mit dem oder den Katalysator(en) oder einem Vorläufer des Katalysators bzw. der Katalysatoren in festem oder flüssigem Milieu zu mischen.

**13.** Verfahren nach Anspruch 12, **dadurch gekennzeichnet, dass** die Herstellung einer festen Zusammensetzung durch eine Fest/Fest-Mischungstechnik realisiert wird.

**14.** Verfahren nach Anspruch 12, **dadurch gekennzeichnet, dass** man eine Lösung oder Dispersion der Basenzusammensetzung mit einer Lösung des Vorläufers oder der Vorläufer des Katalysators mischt.

**15.** Verwendung der Zusammensetzung nach einem der Ansprüche 1 bis 11 bei der Behandlung von Rauchgasen.

**16.** Verwendung der Zusammensetzung nach einem der Ansprüche 1 bis 11 für die Behandlung von Rauchgasen, die Verbindungen vom Typ SOx und/oder NOx enthalten.

**17.** Verwendung der Zusammensetzung nach einem der Ansprüche 1 bis 11 bei der Behandlung von Rauchgasen, **dadurch gekennzeichnet, dass** man diese Rauchgase auf trockenem Wege behandelt.

**18.** Verwendung nach einem der Ansprüche 15 bis 17, **dadurch gekennzeichnet, dass** man die Zusammensetzung in den Gasstrom, gegebenenfalls in Gegenwart von $NH_3$, einspritzt.

**19.** Verwendung nach einem der Ansprüche 15 bis 18, **dadurch gekennzeichnet, dass** die Behandlung bei einer Temperatur zwischen 200 und 700°C, vorteilhafterweise 300 und 500°C ausgeführt wird.

**20.** Verwendung nach einem der Ansprüche 15 bis 19 für die Behandlung von Rauchgasen von Glasöfen.

**Claims**

**1.** Composition for treating fumes, comprising:

- a base component comprising sodium bicarbonate, sodium carbonate, ammonia in the form of ammonium salts such as bicarbonate, carbonate and/or carbamate, and water, and optionally a source of ammonia; and
- catalytic amounts of one or more denitrification catalysts.

**2.** Composition according to Claim 1, **characterized in that** it comprises at least 70% by weight of sodium bicarbonate, preferably at least 80% by weight and more preferably between 80% and 95% by weight.

**3.** Composition according to either of the preceding claims, **characterized in that** it comprises less than 30% by weight of sodium carbonate, preferably less than 20% by weight and more preferably between 5% and 15% by weight.

**4.** Composition according to any one of the preceding claims, **characterized in that** the base component comprises from 0.2% to 0.7% by weight of ammonia, expressed as ammonium ion.

**5.** Composition according to any one of the preceding claims, **characterized in that** it comprises less than 0.1% by weight of ammonium carbamate and preferably between 0.01% and 0.06% by weight.

**6.** Composition according to any one of the preceding claims, **characterized in that** it comprises less than 10% by weight of water and preferably between 0.2% and 6% by weight.

**7.** Composition according to Claim 1, **characterized in that** it is in the form of a powder that is easy to handle.

**8.** Composition according to any one of the preceding claims, **characterized in that** the base component is obtained by heat treatment at a temperature of between 20 and 150°C of ammoniacal bicarbonate.

**9.** Composition according to any one of the preceding claims, **characterized in that** the catalytic denitrifying component is based on vanadium, titanium, manganese, copper, zirconium and/or tungsten.

**10.** Composition according to any one of the preceding claims, **characterized in that** the denitrification catalyst is based on vanadium or manganese, dispersed on titanium.

**11.** Composition according to Claim 9 or Claim 10, **characterized in that** the catalyst also comprises another transition metal, or a rare-earth metal.

**12.** Process for preparing a composition according to any one of the preceding claims, **characterized in that** it consists in mixing the base component with the catalyst(s) or a precursor of the catalyst(s), in solid or liquid medium.

**13.** Process according to Claim 12, **characterized in that** the preparation of a solid composition is carried out by a solid/solid mixing technique.

**14.** Process according to Claim 12, **characterized in that** a solution or dispersion of the base component is mixed with a solution of one or more precursors of the catalyst.

**15.** Use of the composition according to any one of Claims 1 to 11 in the treatment of fumes.

**16.** Use of the composition according to any one of Claims 1 to 11 for the treatment of fumes containing compounds of the type $SO_x$ and/or $NO_x$.

**17.** Use of the composition according to any one of Claims 1 to 11 in the treatment of fumes, **characterized in that** the said fumes are treated via a dry route.

**18.** Use according to any one of Claims 15 to 17, **characterized in that** the composition is injected into the gas stream, optionally in the presence of $NH_3$.

**19.** Use according to any one of Claims 15 to 18, **characterized in that** the treatment is carried out at a temperature of between 200 and 700°C and advantageously between 300 and 500°C.

**20.** Use according to any one of Claims 15 to 19 for the treatment of fumes from glass kilns.